# EUROPEAN PATENT SPECIFICATION

(11) **EP 2 910 827 B1**
(45) Date of publication and mention of the grant of the patent: **22.11.2017**
(21) Application number: 12874366.3
(22) Date of filing: 31.10.2012
(51) Int. Cl.: F16K 7/06

(54) **PINCH VALVE DEVICE**
QUETSCHVENTILVORRICHTUNG
DISPOSITIF DE VANNE À MANCHON

(43) Date of publication of application: 26.08.2015
(73) Proprietor: Ohki-Industry Co., Ltd., Kounosu-shi Saitama 365-0078 (JP)
(72) Inventor: OHKI, Akihito, kounosu-shi Saitama 365-0078 (JP)
(74) Representative: Ter Meer Steinmeister & Partner
(86) International application number: PCT/JP2012/078145
(87) International publication number: WO 2014/068696

(56) References cited:
- WO-A1-2007/048163
- AT-B- 222 965
- JP-A- H0 771 627
- JP-A- S5 846 271
- JP-A- 2002 122 252
- JP-U- S5 470 762
- JP-U- S50 120 029
- US-A- 3 467 151
- US-A1- 2012 138 832

## Description

### [Technical Field]

The present invention relates to a switch valve for a liquid, and particularly to a pinch valve.

### [Background Art]

WO 2007/048163 A1 discloses a pinch valve device comprising the features of the preamble of claim 1. In a plant for producing liquid food products, milk products, pharmaceuticals, cosmetics and the like, prevention of clogging of inside of a switch valve equipped in a piping line, easiness of cleaning of the inside, and easiness of assembling/disassembling are needed.

### [Patent Literature]

[Patent Literature 1] Japanese Patent Laid-Open Publication No. 2002-122252

### [Technical Problem]

With this type of pinch valve, a tube having a strong elastic force such as silicon rubber and the like is mechanically squeezed from the outside for performing a valve closing operation.

Problems of the current switch valve are size minimization of a space between valve faces, prevention of clogging of the inside, reduction of the number of components, easiness of cleaning of the inside, size minimization of a switching mechanism, and clarification of opened/closed states.

The present invention has an object to provide a switch valve which solves the aforementioned problems.

### [Solution to Problem]

In order to achieve the aforementioned object, a pinch valve device of the present invention, as defined by the appended claim 1, is provided with a valve housing having a disk shape, a rotor rotatably disposed inside the valve housing, a tube made of an elastic material disposed on an inner side of the rotor, a pair of pinch levers swingably disposed on an outer side of a center part of the tube, and a means for driving the tube in a direction of sandwiching the tube with the pair of pinch levers.

The valve housing is provided with piping mounting portions protruding outwardly with respect to each other and flanges provided at distal ends of the piping mounting portions, and a tightening tool for fastening tube flanges provided on both end portions of the tube to the flanges of the piping mounting portions is provided.

Moreover, the means for driving the pinch levers is a cam crest formed on the inner side of the rotor, and furthermore, a gear portion formed on the outer side of the rotor, a pinion meshed with the gear portion, and a driving device driving the pinion are provided.

### [Advantageous Effect of Invention]

By providing the aforementioned means, the pinch valve device of the present invention has a simple structure and can reliably open/close a tube such as silicon rubber and the like having a strong elastic force.

### [Brief Description of Drawings]

[FIG. 1] FIG. 1 is a perspective view illustrating an embodiment of the present invention.
[FIG. 2] FIG. 2 is a perspective view illustrating the embodiment of the present invention.
[FIG. 3] FIG. 3 is a component configuration diagram of the present invention.
[FIG. 4] FIG. 4 is a perspective view illustrating the embodiment of the present invention.
[FIG. 5] FIG. 5 is a perspective view illustrating the embodiment of the present invention.
[FIG. 6] FIG. 6 is a component configuration diagram of the present invention.
[FIG. 7] FIG. 7 is a sectional view of an essential part of the present invention.
[FIG. 8] FIG. 8 is a sectional view of the essential part of the present invention.
[FIG. 9] FIGS. 9 are explanatory diagrams illustrating an action of the present invention.
[FIG. 10] FIG. 10 is a sectional view of the essential part of the present invention.
[FIG. 11] FIG. 11 is an explanatory diagram of a driving mechanism of the present invention.
[FIG. 12] FIGS. 12 are explanatory diagrams of the driving mechanism of the present invention.
[FIG. 13] FIG. 13 is explanatory diagrams of the driving mechanism of the present invention.
[FIG. 14] FIGS. 14 are explanatory diagrams of the driving mechanism of the present invention.
[FIG. 15] FIG. 15 is an explanatory diagram of the driving mechanism of the present invention.

### [Description of Embodiment]

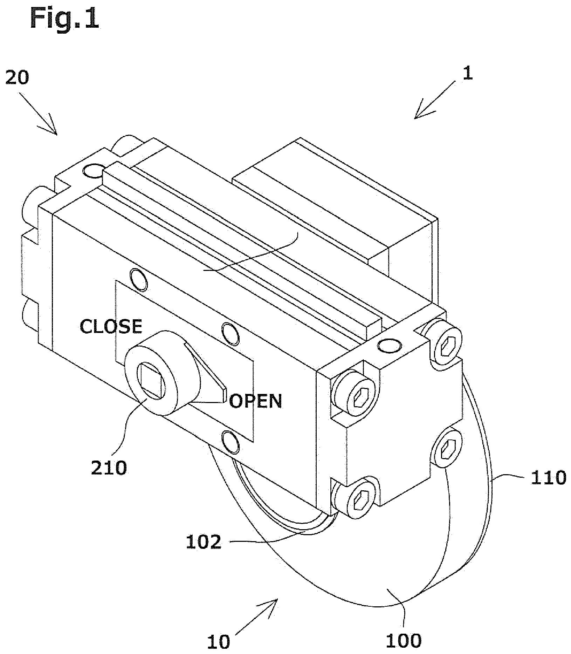

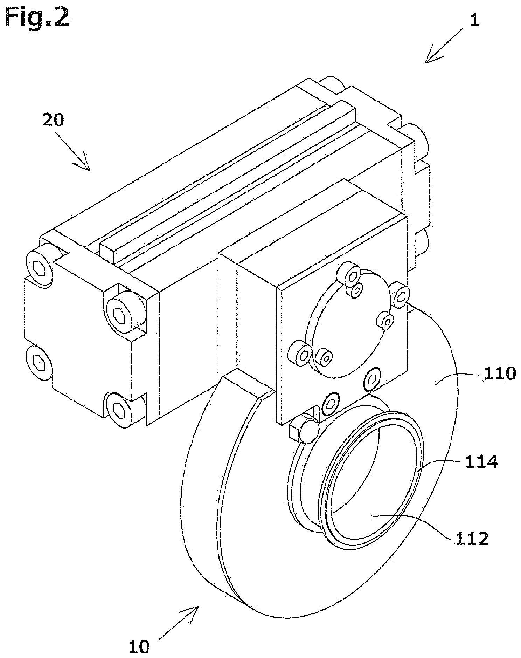

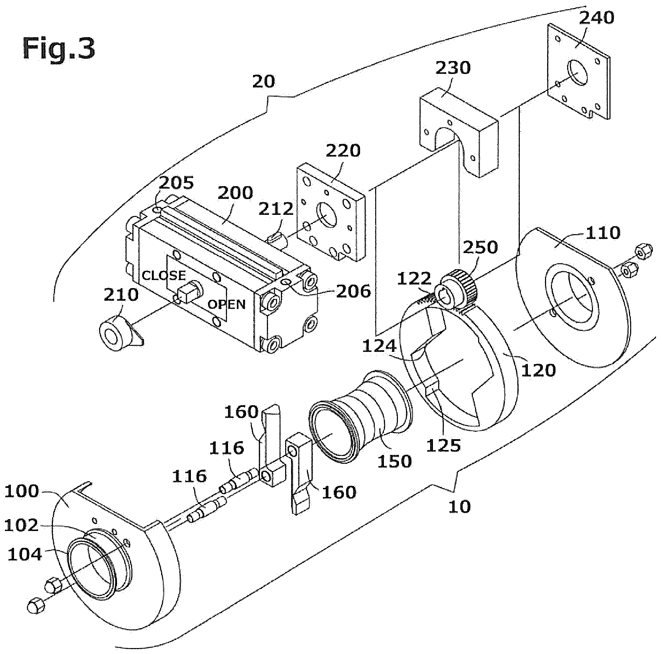

FIGS. 1 and 2 are perspective views illustrating an appearance of an automatic pinch valve device 1 of the present invention, and FIG. 3 is a component configuration diagram.

The automatic pinch valve device 1 is provided with a valve main body 10 having an appearance of a disk shape and a pinch lever 160 for opening/closing a tube equipped inside the valve main body 10.

The valve main body 10 is provided with a first valve housing 100 and a second valve housing 110, and a piping mounting portion 102 is provided on the first valve housing 100, while a piping mounting portion 112 is provided on the second valve housing 110.

A driving device 20 has an actuator housing 200, a first plate 220, a cover 230, and a second plate 240 and rotates and drives a pinion 250 by making high-pressure air flow in through a port 205 of the actuator housing 200 so as to rotationally move a driving shaft 212 through a rack and the pinion. The pinion 250 is meshed with a gear portion 122 of a rotor 120, and by means of rotational movement of the rotor 120, the pinch lever 160 is operated by a first cam crest 124 and a second cam crest 125 so as to pinch a tube 150.

Moreover, a high-pressure air is made to flow in through a port 206 of the actuator housing 200, so as to open the tube 150.

A rotation position of the driving shaft is indicated on an indicator panel 210.

The driving shaft 212 is covered by the first plate 220, the cover 230, and the second plate 240 and drives the pinion 250. The rotational movement of the driving shaft 212 is transmitted to the switching indicator panel 210, and the switching indicator panel 210 indicates an opened/closed state of the valve.

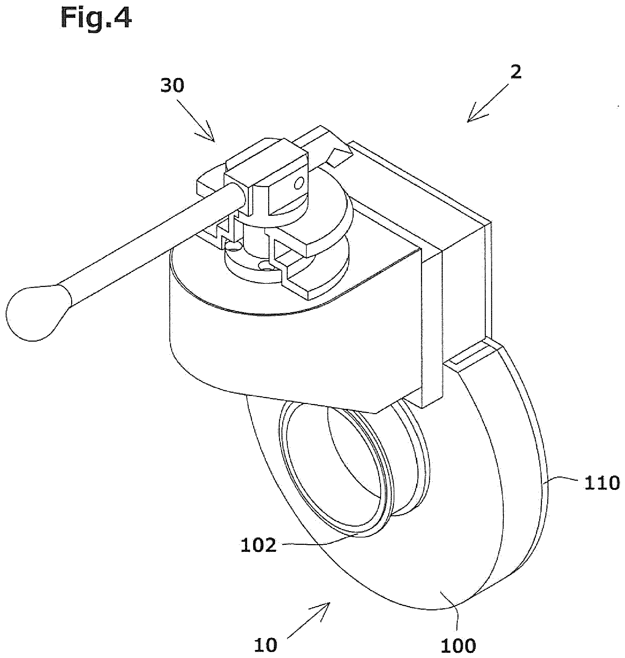

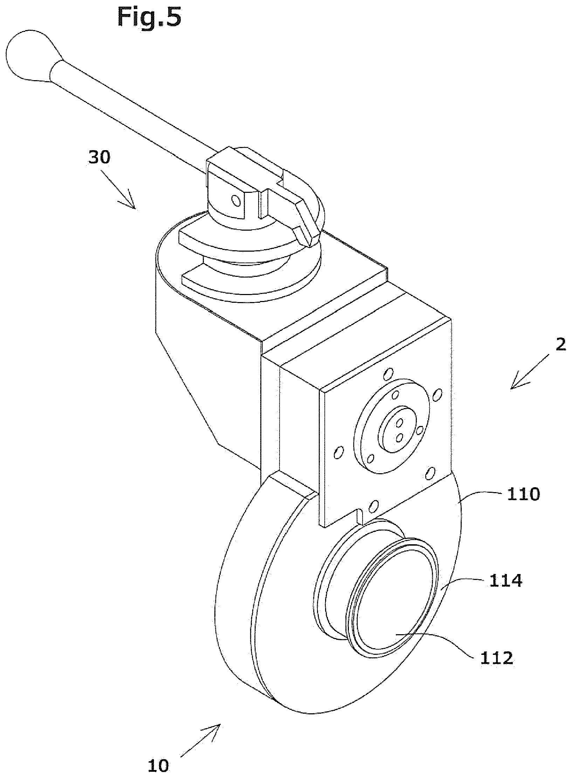

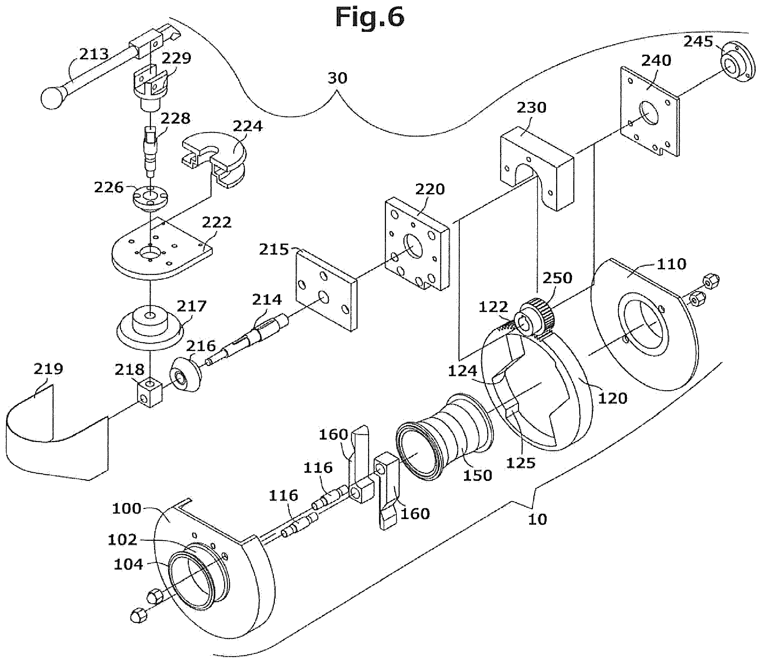

FIGS. 4 and 5 are perspective views illustrating an appearance of a manual pinch valve device 2 of the present invention, and FIG. 6 is a component configuration diagram.

The manual pinch valve device 2 is provided with the valve main body 10 having an appearance of a disk shape and the pinch lever 160 for opening/closing a tube equipped inside the valve main body 10.

The valve main body 10 is provided with the first valve housing 100 and the second valve housing 110, and the piping mounting portion 102 is provided on the first valve housing 100, while the piping mounting portion 112 is provided on the second valve housing 110.

A manual driving device 30 has a handle 213, a driving shaft 214, a stopper 215, a screw piece 216, the first plate 220, the cover 230, and the second plate 240, and by means of rotational movement of the driving shaft 214 by the handle 213, the pinion 250 is rotated and driven. The pinion 250 is meshed with the gear portion 122 of the rotor 120, and by means of rotational movement of the rotor 120, the pinch lever 160 is operated by the first cam crest 124 and the second cam crest 125 so as to pinch or open the tube 150.

An end portion of a shaft 228 is supported by a bearing 218, and the bearing 218 covered by a cover 219 supports one end portion of the driving shaft 214, and the driving shaft 214 penetrates the cover 215, the first plate 220, the cover 230, and the second plate 240 and has the other end portion supported by a cover 245.

A bevel gear 217 mounted on the shaft 228 is meshed with a bevel gear 216 mounted on the driving shaft 214 and transmits revolving movement of the shaft 228 to the driving shaft 214.

The driving shaft 214 is connected to the pinion 250 through a key and rotates and drives the pinion 250.

Insides of the first valve housing 100 and the second valve housing 110, the rotor 120 is rotatably inserted. The gear portion 122 is formed on a part of an outer peripheral part of the rotor 120, and a pair of the first cam crest 124 and the second cam crest 125 are provided facing with each other inside the rotor 120.

Inside the rotor 120, the tube 150 is equipped. The tube 150 is made of silicon rubber or the like having a strong elastic force, and both end portions thereof are gripped firmly by flange portions of the first valve housing 100 and the second valve housing 110. Outside the center part of the tube 150, a pair of the pinch levers 160 sealing a flow of a fluid flowing inside by pinching the tube 150 are swingably provided. The pinch lever 160 seals the inside by squeezing the outer peripheral part of the tube 150 in a state which will be described later by rotational movement of the rotor 120.

In the pinch valve of the present invention, when the tube 150 is sandwiched between the pinch levers 160 and arranged, in an initial state (opened valve state), the tube 150 is squeezed in advance only by a small amount and set. By this setting, an opening/closing speed of the tube 150 is improved, and a revolving operation of the pinch lever 160 can be shorter.

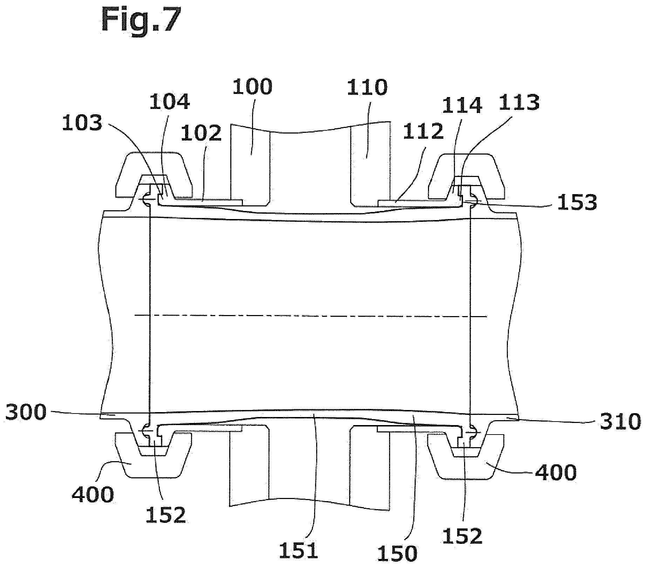

FIG. 7 is a sectional view illustrating a mounted structure of the tube 150.

The tube 150 has a cylindrical shape made of silicon rubber or the like, a center part thereof is formed into a thin portion 151, and a tube flange 152 is provided on both end portions thereof. On an end portion of the piping mounting portion 102 of the first valve housing 100, a flange 104 having a projecting portion 103 is provided, while on an end portion of the piping mounting portion 112 of the second valve housing 110, a flange 114 having a projecting portion 113 is provided.

To both sides of the tube 150, a pipe 300 and a pipe 310 are connected and concluded by using a tightening tool 400.

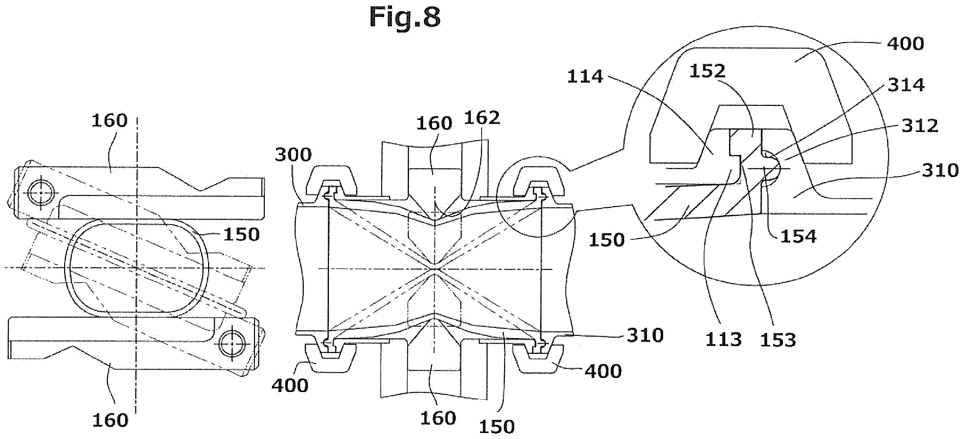

FIG. 8 illustrates a detail of the mounted structure of both end portions of the tube 150.

The tube flange 152 of the tube 150 has a projecting portion 154 provided on an outer-side end face of the projecting portion tube flange and a groove portion 153 provided on an inner-side end face of the tube flange, and a piping flange 312 of the pipe 310 has a groove portion 314. The projecting portion 154 of the tube flange 152 is fitted in the groove portion 314 of the pipe 310, and the projecting portion 113 of the flange 114 is fitted in the groove portion 153 of the tube flange 152 and tightened by the tightening tool 400.

If the tube 150 is pinched by the pinch lever 160, the tube 150 is generally elongated and seals the inside thereof. By fitting the groove portion 153 of the tube flange 152 with the projecting portion 113 of the flange 114, gripping on both end portions of the tube 150 is made firmer so as to correspond to deformation of this tube 150. Moreover, since the center part of the tube 150 is formed as the thin portion 151, sealing performance when the valve is closed is also improved.

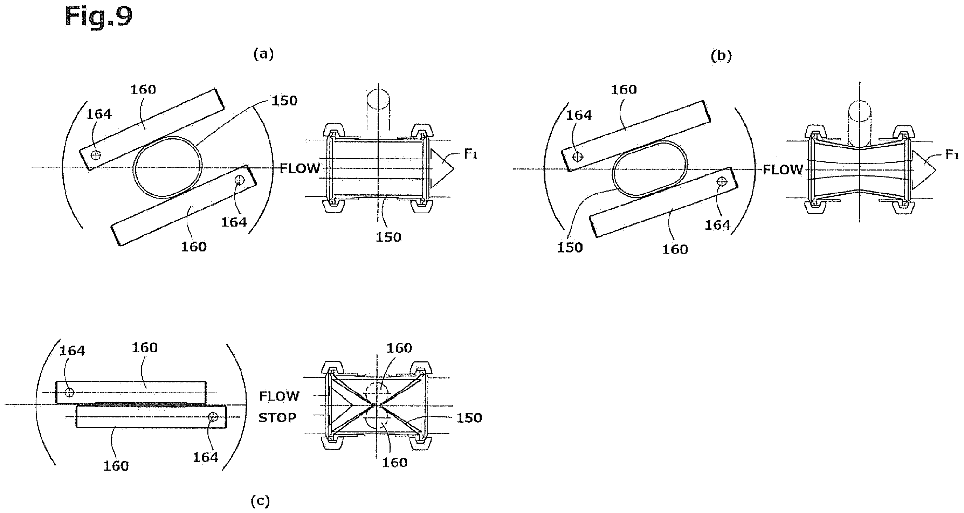

FIGS. 9(a), 9(b), and 9(c) illustrate states of pinching of the tube 150 by the pinch levers 160. FIG. 9(a) illustrates a state in which the tube 150 is fully opened, and a flow F₁ of the fluid flowing through the inside is the maximum flow rate. FIG. 9(b) illustrates a state in which the tube 150 is squeezed by approximately half by the pinch lever 160, and the flow rate F₁ is reduced.

FIG. 9(c) illustrates a state in which the tube 150 is fully squeezed by the pinch lever 160, and the flow of the fluid is stopped.

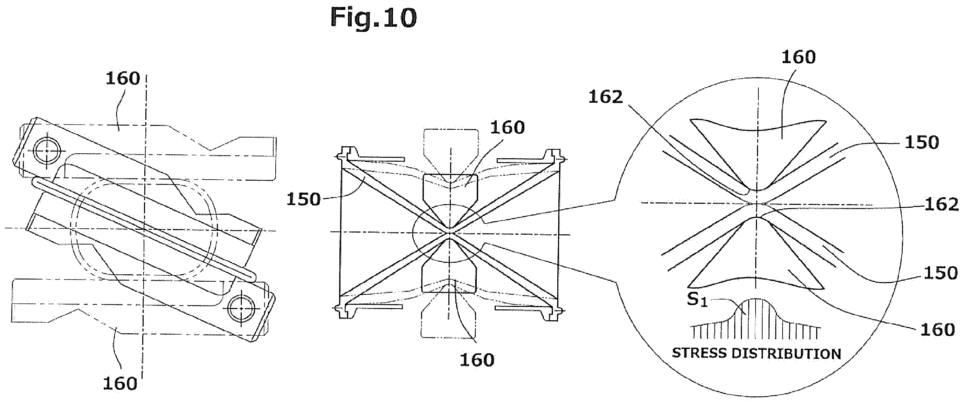

FIG. 10 illustrates stress distribution S₁ received by the tube 150 due to the pinching. By forming a distal end of the pinch lever 160 as an arc-shaped projecting portion 162, the stress S₁ received by a pinched part of the tube 150 becomes as illustrated in the figure, and concentration of forces is prevented.

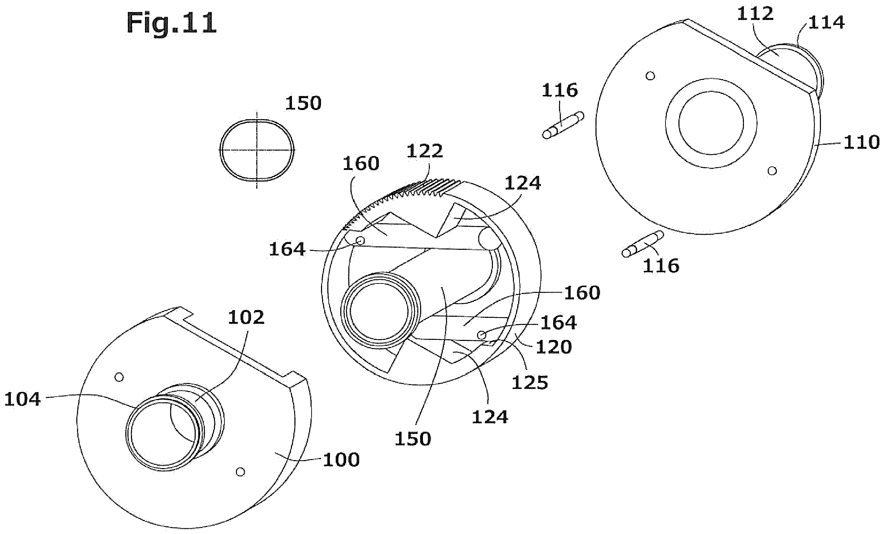

FIG. 11 is an explanatory diagram illustrating an operation mechanism of the pinch lever 160 by the rotor 120. The pair of pinch levers 160 disposed on the inner side of the rotor 120 are swingably supported by a support column 116 mounted between the first valve housing 100 and the second valve housing 110.

When the rotor 120 rotationally moves, the pinch levers 160 are pressed to the inside by the first cam crest 124 formed on the inner side of the rotor 120 and pinch the center part of the tube 150 toward the center.

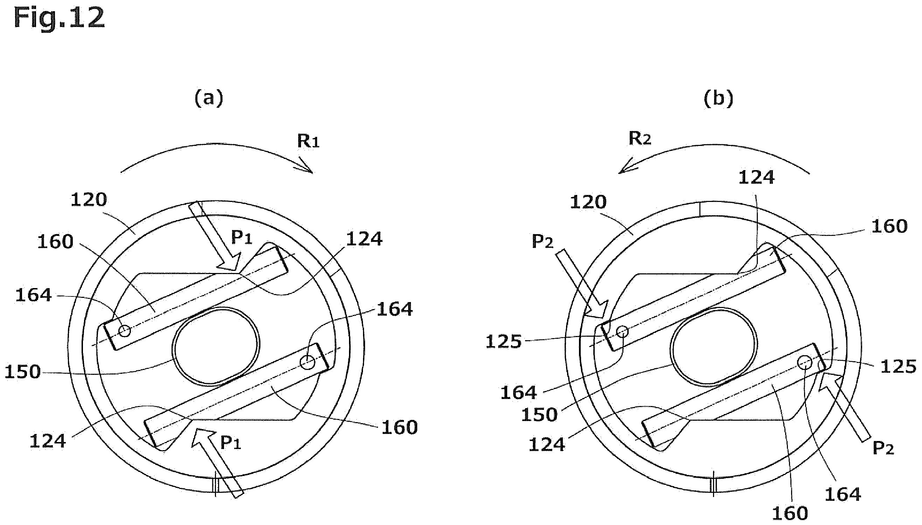

FIGS. 12(a) and 12(b) illustrate a detail of this operation.

When the rotor 120 rotationally moves in an arrow R₁ direction as illustrated in FIG. 12(a), the first cam crest 124 applies a pressure P₁ to the pinch lever 160 and squeezes the tube 150. As illustrated in FIG. 12(b), when the rotor 120 rotationally moves in an arrow R₂ direction, the second cam crest 125 applies a pressure P₂ to the rear end portion side of a shaft hole 164 of the pinch lever 160 and separates the pinch lever 160 from the tube 150.

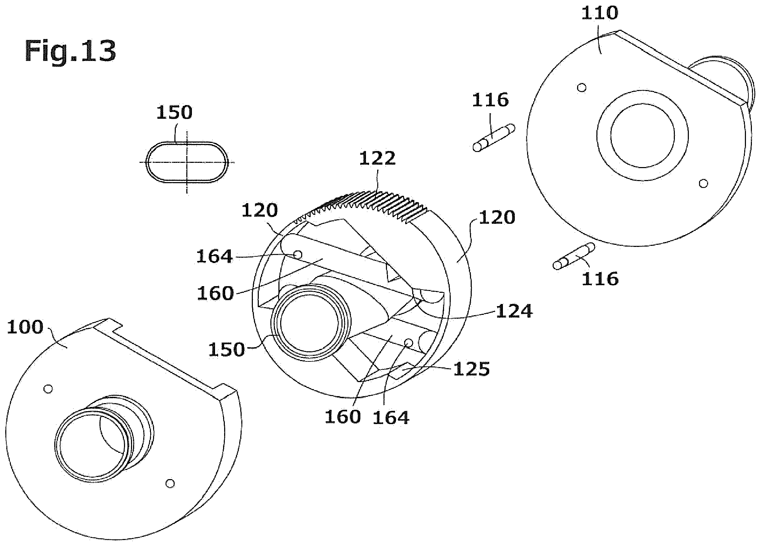

FIG. 13 is a structural diagram illustrating pinching of the tube 150 by the rotor 120.

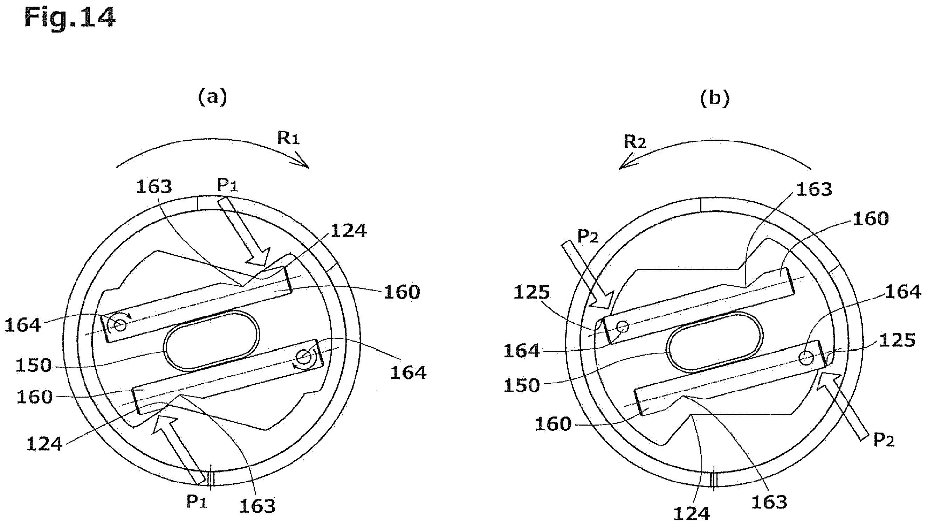

FIGS. 14 are explanatory diagrams illustrating actions of the pressures P₁ and P₂ to the pinch lever 160 by the first cam crest 124 and the second cam crest 125 explained also in FIG. 9.

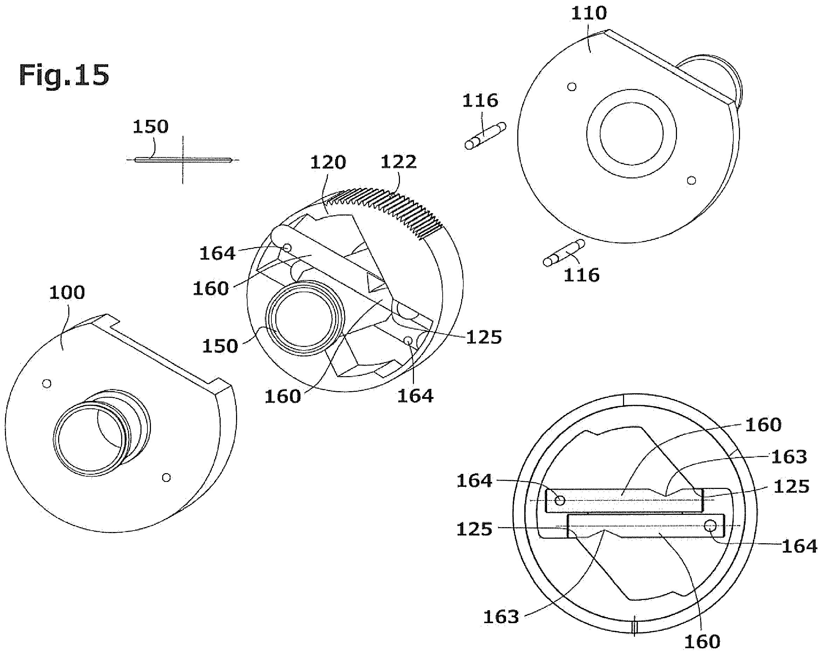

FIG. 15 illustrates a state in which the tube 150 is fully squeezed and the valve is closed.

In the pinch valve of the present invention, since the rotor 120 rotates and squeezes the tube 150 with the pinch lever 160, the pinch lever 160 squeezes the tube 150 while rotating with respect to the outer peripheral part of the tube 150. By means of this action, unlike a structure of a prior-art pinch valve which squeezes one point on the outer peripheral part of the tube 150, stress concentration acting on the tube 150 does not occur, and durability of the tube 150 is improved.

That is, the pair of pinch levers 160 are pushed out towards the center direction of the rotor 120 by the first cam crest 124 with rotation of the rotor 120.

Due to this action, the pair of pinch levers 160 are brought into contact with the outer peripheral part of the tube 150 while revolving to squeeze the tube.

Thus, as compared with a mechanism which squeezes the tube by linearly moving the lever in a radial direction, an influence of damaging the tube 150 can be alleviated.

### [Reference Signs List]

- 1: automatic pinch valve device
- 2: manual pinch valve device
- 10: valve main body
- 20: driving device
- 30: driving device
- 100: first valve housing
- 102: piping mounting portion
- 103: projecting portion
- 104: flange
- 110: second valve housing
- 112: piping mounting portion
- 113: projecting portion
- 114: flange
- 116: support column
- 120: rotor
- 122: gear portion
- 124: first cam crest
- 125: second cam crest
- 150: tube
- 151: thin portion
- 152: tube flange
- 153: groove portion
- 154: projecting portion
- 160: pinch lever
- 162: projecting portion
- 163: recess groove
- 164: shaft hole
- 200: actuator housing
- 205: port
- 206: port
- 210: switching indicator panel
- 212: driving shaft
- 213: handle
- 214: driving shaft
- 215: cover
- 216: gear
- 217: gear
- 218: bearing
- 219: cover
- 220: first plate
- 222: plate
- 224: semicircular plate
- 226: bearing
- 228: shaft
- 229: handle receiver
- 230: cover
- 240: second plate
- 245: cover
- 250: pinion
- 300: pipe
- 310: pipe
- 312: piping flange
- 314: groove portion
- 400: tightening tool

## Claims

1. A pinch valve device (1) comprising:
a valve housing (100,110) having a disk shape;
a rotor (120) rotatably disposed inside the valve housing (100,110);
a tube (150) having a cylindrical shape and made of an elastic material which is disposed on an inner side of the rotor (120);
a pair of pinch levers (160) swingably disposed on an outer side of a center part of the tube (150); and
a means for driving the pair of pinch levers (160) in a direction of sandwiching the tube (150) while revolving on an outer peripheral part of the tube (150),
**characterized in that** the valve housing is provided with piping mounting portions (102, 112) protruding outwardly with respect to each other and flanges (104, 114) provided at distal ends of the piping mounting portions (102, 112),
wherein the flanges (104,114) are provided with projecting portions (103, 113), and the tube (150) is provided with tube flanges (152) on both ends thereof,
each tube flange (152) being provided with a projecting portion (154) provided on an outer-side end face of the tube flange (152) and a groove portion (153) provided on an inner-side end face of the tube flange (152),
wherein the valve housing is further provided with a tightening tool (400) for fastening the tube flanges (152) to the flanges (104, 114) of the piping mounting portions (102, 112), in a state in which the projecting portions (103, 113) of the flanges (104, 114) of the piping mounting portions (102, 112) are fitted into the groove portions (153) of the tube flanges (152).

2. The pinch valve device according to claim 1, wherein
the tube (150) is mounted between the pinch levers (160) in an open valve state sandwiched by the pair of pinch levers (160) and in a state squeezed by a small amount from the cylindrical shape.

3. The pinch valve device according to claim 1, wherein the means for driving the pinch levers (160) is a cam crest formed on the inner side of the rotor (120).

4. The pinch valve device according to claim 1, comprising:
a gear portion formed on the outer side of the rotor (120), a pinion (250) meshed with the gear portion (122), and a driving device for driving the pinion (250).

5. The pinch valve device according to claim 4, wherein
the means for driving the pinion (250) is composed of an air cylinder and a rack and a pinion.

6. The pinch valve device according to claim 4, wherein
the means for driving the pinion (250) is a manual handle which is configured to revolve.

7. The pinch valve device according to claim 1, wherein
the tube (150) is formed such that a thickness dimension on a center part is smaller than a thickness dimension of both end portions.

## Patentansprüche

1. Klemmventil-Vorrichtung (1), umfassend:
ein Ventilgehäuse (100,110) mit einer Scheibenform;
einen Rotor (120), der drehbar in dem Ventilgehäuse (100,110) angeordnet ist;
ein Rohr (150) mit einer zylindrischen Form und hergestellt aus einem elastischen Material, welches auf einer Innenseite des Rotors (120) angeordnet ist;
ein Paar von Klemmhebeln (160), die schwenkbar auf einer Außenseite eines mittleren Teils des Rohrs (150) angeordnet sind; und
ein Mittel zum Antrieb des Paars von Klemmhebeln (160) in einer Richtung zum Einklemmen des Rohrs (150), während einer Drehung auf einem äußeren Umfangsteil des Rohrs (150),
**dadurch gekennzeichnet, dass** das Ventilgehäuse mit Rohrmontageteilen (102,112) ausgestattet ist, welche voneinander nach außen vorspringen, und mit Flanschen (104,114), die an äußeren Enden der Rohrmontageteile (102,112) vorgesehen sind,
welche Flansche (104,114) mit vorspringenden Teilen (103,113) versehen sind, und welches Rohr (150) mit Rohrflanschen (152) an seinen beiden Enden ausgestattet ist,
wobei jeder Rohrflansch (152) mit einem vorspringenden Bereich (154) versehen ist, der an einer äußeren Stirnfläche des Rohrflansches (152) vorgesehen ist, und einem Nutteil (153), der auf einer inneren Stirnfläche des Rohrflansches (152) vorgesehen ist,
und wobei das Ventilgehäuse ferner mit einem Dichtwerkzeug (400) zur Befestigung der Rohrflansche (152) an den Flanschen (104,114) der Rohrmontageteile (102,112) in einem Zustand versehen ist, in welchem die Vorsprungsteile (103,113) der Flansche (104,114) der Rohrmontageteile (102,112) in die Nutteile (153) der Rohrflansche (152) eingepasst sind.

2. Klemmventil-Vorrichtung gemäß Anspruch 1, bei welcher
das Rohr (150) zwischen den Klemmhebeln (160) in einem offenen Ventilzustand installiert ist, in welchem es zwischen dem Paar von Klemmhebeln (160) einliegt und von der Zylinderform abweichend um einen kleinen Betrag eingeklemmt ist.

3. Klemmventil-Vorrichtung gemäß Anspruch 1, bei welcher
das Mittel zum Antrieb der Klemmhebel (160) ein Nockenscheitel ist, der auf der Innenseite des Rotors (120) ausgebildet ist.

4. Klemmventil-Vorrichtung gemäß Anspruch 1, umfassend:
ein Getriebeteil, der auf der Außenseite des Rotors (120) ausgebildet ist, ein Zahnrad (250), das den Getriebeteil (122) kämmt, und eine Antriebsvorrichtung zum Antrieb des Zahnrads (250).

5. Klemmventil-Vorrichtung gemäß Anspruch 4, bei welcher
die Mittel zum Antrieb des Zahnrads (250) aus einem Luftzylinder und einer Zahnstange und einem Zahnrad zusammengesetzt sind.

6. Klemmventil-Vorrichtung gemäß Anspruch 4, bei welcher
die Mittel zum Antrieb des Zahnrads (250) ein Handgriff sind, der zur Drehung angeordnet ist.

7. Klemmventil-Vorrichtung gemäß Anspruch 1, bei welcher
das Rohr (150) derart geformt ist, dass eine Dickenabmessung eines mittleren Teils kleiner ist als eine Dickenabmessung beider Endbereiche.

## Revendications

1. Dispositif de vanne à étranglement (1), comprenant :
un boîtier de vanne (100, 110) ayant une forme de disque ;
un rotor (120) disposé de façon à pouvoir tourner à l'intérieur du boîtier de vanne (100, 110) ;
un tube (150) ayant une forme cylindrique et réalisé en un matériau élastique qui est disposé sur un côté intérieur du rotor (120) ;
une paire de leviers d'étranglement (160) disposés de façon à pouvoir osciller sur un côté extérieur d'une partie centrale du tube (150) ; et
des moyens pour entraîner la paire de leviers d'étranglement (160) dans une direction de prise en sandwich du tube (150) tout en tournant sur une partie périphérique extérieure du tube (150),
**caractérisé en ce que** le boîtier de vanne est muni de parties de montage de tubulure (102, 112) faisant saillie vers l'extérieur l'une par rapport à l'autre et de brides (104, 114) disposées à des extrémités distales des parties de montage de tubulure (102, 112),
dans lequel les brides (104, 114) sont munies de parties saillantes (103, 113), et le tube (150) est muni de brides de tube (152) aux deux extrémités de celui-ci,
chaque bride de tube (152) étant munie d'une partie saillante (154) disposée sur une face d'extrémité de côté extérieur de la bride de tube (152) et d'une partie de rainure (153) disposée sur une face d'extrémité de côté intérieur de la bride de tube (152),
dans lequel le boîtier de vanne est de plus muni d'un outil de serrage (400) pour fixer les brides de tube (152) aux brides (104, 114) des parties de montage de tubulure (102, 112), dans un état dans lequel les parties saillantes (103, 113) des brides (104, 114) des parties de montage de tubulure (102, 112) sont adaptées dans les parties de rainure (153) des brides de tube (152).

2. Dispositif de vanne à étranglement selon la revendication 1, dans lequel :
le tube (150) est monté entre les leviers d'étranglement (160) dans un état de vanne ouverte, pris en sandwich par la paire de leviers d'étranglement (160), et dans un état pincé d'une faible ampleur à partir de la forme cylindrique.

3. Dispositif de vanne à étranglement selon la revendication 1, dans lequel les moyens pour entraîner les leviers d'étranglement (160) sont une crête de came formée sur le côté intérieur du rotor (120).

4. Dispositif de vanne à étranglement selon la revendication 1, comprenant :
une partie d'engrenage formée sur le côté extérieur du rotor (120), un pignon (250) s'engrenant avec la partie d'engrenage (122), et un dispositif d'entraînement pour entraîner le pignon (250).

5. Dispositif de vanne à étranglement selon la revendication 4, dans lequel :
les moyens pour entraîner le pignon (250) sont constitués par un cylindre à air et une crémaillère et un pignon.

6. Dispositif de vanne à étranglement selon la revendication 4, dans lequel :
les moyens pour entraîner le pignon (250) sont une poignée manuelle qui est configurée de façon à tourner.

7. Dispositif de vanne à étranglement selon la revendication 1, dans lequel :
le tube (150) est formé de telle sorte qu'une dimension d'épaisseur sur une partie centrale soit inférieure à une dimension d'épaisseur de deux parties d'extrémité.
